# EUROPÄISCHE PATENTSCHRIFT

(11) **EP 3 328 683 B1**
(45) Veröffentlichungstag und Bekanntmachung des Hinweises auf die Patenterteilung: **27.01.2021**
(21) Anmeldenummer: 16751201.1
(22) Anmeldetag: 22.07.2016
(51) Int. Cl.: B60N 2/16, B60N 2/22, B60N 2/225, B60N 2/90, F16D 41/06

(54) **SITZVERSTELLER MIT ZUSATZVERRIEGELUNG**
SEAT ADJUSTER WITH ADDITIONAL LOCKING MEANS
DISPOSITIF DE RÉGLAGE DE SIÈGE AVEC VERROUILLAGE SUPPLÉMENTAIRE

(30) Priorität: 28.07.2015 DE 202015103949 U
(43) Veröffentlichungstag der Anmeldung: 06.06.2018
(73) Patentinhaber: Rollax GmbH & Co. KG, 32107 Bad Salzuflen (DE)
(72) Erfinder: KUHLMANN, Michael, 33604 Bielefeld (DE); FRANKE, Jörg, 32427 Minden (DE)
(74) Vertreter: Ter Meer Steinmeister & Partner
(86) Internationale Anmeldenummer: PCT/EP2016/067490
(87) Internationale Veröffentlichungsnummer: WO 2017/016996

(56) Entgegenhaltungen:
- WO-A1-2012/013234
- DE-A1- 3 815 602
- DE-A1- 10 355 821

## Beschreibung

Die Erfindung betrifft einen Sitzversteller mit einem feststehenden Teil, einem Antriebselement, einem Abtriebselement, einer Klemmkörper-Kupplungsanordnung, die eine hin und her gehende Bewegung des Antriebselements aus einer Neutralstellung heraus und zurück in die Neutralstellung in eine fortgesetzte Bewegung des Abtriebselements in einer einheitlichen Drehrichtung umsetzt, und einer lösbaren Verriegelungseinrichtung zur formschlüssigen Verriegelung des Abtriebselements an dem feststehenden Teil.

Ein Sitzversteller dieser Art ist aus EP 0 979 179 B2 bekannt.

Solche Sitzversteller werden insbesondere in Kraftfahrzeugen dazu eingesetzt, ein Verstellmoment von einem Betätigungsorgan auf ein Getriebe zu übertragen, das den zu verstellenden Teil des Fahrzeugsitzes antreibt, beispielsweise zur Sitzhöhenverstellung.

Wenn mit Hilfe eines Betätigungsorgans ein Drehmoment auf das Antriebselement ausgeübt wird, so werden die Klemmkörper aus der Klemmstellung gelöst, so dass das Antriebsdrehmoment auf das Abtriebselement übertragen werden kann. Sobald das Antriebselement wieder kräftefrei ist, werden die Klemmkörper elastisch in die Klemmstellung gedrückt, so dass das Abtriebselement in der dann erreichten Position an dem feststehenden Teil arretiert wird. Eine Einwegkupplung sorgt dafür, dass sich bei der Rückkehr des Antriebselements in die Neutralstellung nur dieses Antriebselement bewegt, während das Abtriebselement in der verstellten Position bleibt.

Ein ähnlicher Sitzversteller ist auch aus DE 20 2010 007 993 U1 bekannt. In EP 0 743 221 B1 und WO 2012/013234 A1 werden Sitzversteller beschrieben, bei denen anstelle der Einwegkupplung eine zweite Klemmkörperkupplung vorgesehen ist.

Die durch die Klemmkörper erzeugte Klemmkraft ermöglicht es, den verstellbaren Teil des Fahrzeugsitzes auch dann sicher in der eingestellten Position zu halten, wenn beispielsweise bei einem Aufprall des Kraftfahrzeugs sehr hohe äußere Kräfte auf den Fahrzeugsitz wirken. Wenn jedoch das Antriebselement dauernd einem Drehmoment ausgesetzt ist, beispielsweise infolge der Gewichtskraft einer auf dem Fahrzeugsitz sitzenden Person oder, bei unbelastetem Sitz, aufgrund der Kraft einer Feder, die die Gewichtskraft der Person teilweise ausgleichen soll, so kann es infolge von Erschütterungen zu einem allmählichen Ablaufen der Klemmkörper an den Klemmkonturen und damit zu einer unerwünschten allmählichen Verstellung des Sitzes kommen. Aus diesem Grund wird in der eingangs genannten Druckschrift EP 0 979 179 B2 eine Verriegelungseinrichtung beschrieben, die eine zusätzliche formschlüssige Verriegelung des Abtriebselements in der eingestellten Position erlaubt und so ein allmähliches Ablaufen der Klemmkörper verhindert. Sobald jedoch das Betätigungsorgan betätigt wird, um den Fahrzeugsitz absichtlich zu verstellen, wird diese zusätzliche Verriegelung automatisch gelöst. Bei dem bekannten Sitzversteller wird die Verriegelungseinrichtung durch einen Riegel gebildet, der außerhalb des Umfangs der Klemmkörperkupplung angeordnet ist.

Sitzversteller mit den Merkmalen nach dem Oberbegriff des Patentanspruchs sind aus DE 38 15 602 A1 und in ähnlicher Form aus DE 103 55 821 A1 bekannt.

Aufgabe der Erfindung ist es, einen Sitzversteller mit einer Zusatzverriegelung zu schaffen, die einen einfachen und kompakten Aufbau aufweist.

Diese Aufgabe wird erfindungsgemäß mit den im Patentanspruch angegebenen Merkmalen gelöst.

Im folgenden wird ein Ausführungsbeispiel anhand der Zeichnung näher erläutert.

Es zeigen:
- Fig. 1: einen axialen Schnitt durch ein Gehäuse eines Sitzverstellers, der kein Ausführungsbeispiel der Erfindung ist, an dem sich jedoch wesentliche Merkmale der Erfindung erläutern lassen;
- Fig. 2: eine perspektivische Ansicht einer ersten Klemmkörperkupplung des Sitzverstellers;
- Fig. 3: einen horizontalen Schnitt durch eine zweite Klemmkörperkupplung des Sitzverstellers;
- Fig. 4: einen axialen Schnitt durch eine aus den ersten und zweiten Klemmkörperkupplungen gebildete Kupplungsanordnung;
- Fig. 5: einen Schnitt längs der Linie V-V in Fig. 4;
- Fig. 6: einen Schnitt längs der Linie VI-VI in Fig. 1;
- Fig. 7: eine Darstellung analog zu Fig. 1, jedoch für den entriegelten Zustand des Sitzverstellers; und
- Fig. 8: eine perspektivische Explosionsdarstellung von Teilen eines Sitzverstellers gemäß einem Ausführungsbeispiel der Erfindung.

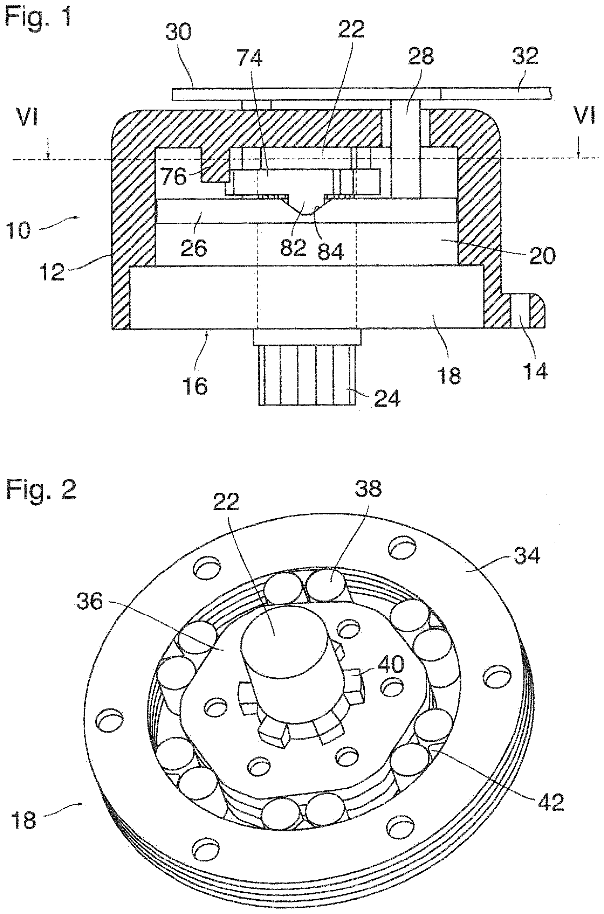

In Fig. 1 ist ein Sitzversteller 10 mit einem topfförmigen Gehäuse 12 gezeigt, das mit Befestigungsaugen 14 an einem nicht gezeigten Tragteil, beispielsweise einem Rahmen eines Kraftfahrzeugssitzes zu befestigen ist und eine Kupplungsanordnung 16 mit einer ersten Klemmkörperkupplung 18 und einer zweiten Klemmkörperkupplung 20 aufnimmt.

Eine Welle 22, die koaxial durch das Gehäuse 12 verläuft, bildet außerhalb des Gehäuses ein Ritzel 24. Die Welle 22 und das Ritzel 24 bilden zusammen ein Abtriebselement des Sitzverstellers.

Auf der dem Ritzel 24 entgegengesetzten Seite der Kupplungsanordnung 16 ist ein Antriebselement 26 drehbar in dem Gehäuse 12 aufgenommen. Das Antriebselement 26 ist über Pfosten 28 mit einem Betätigungsorgan 30 verbunden, von dem ein Hebel 32 ausgeht. Die Pfosten 28 erstrecken sich durch kreisbogenförmige Schlitze in der Decke des Gehäuses 12, so dass das Betätigungsorgan 30 und das Antriebselement 26 relativ zu dem Gehäuse 12 drehbar sind.

Anhand der Figuren 2 bis 7 soll nun zunächst der Aufbau der Kupplungsanordnung 16 beschrieben werden.

In Fig. 2 ist die erste Klemmkörperkupplung 18 etwas detaillierter in einer perspektivischen Darstellung gezeigt. Diese Klemmkörperkupplung weist einen Außenring 34, einen Innenring 36 und mehrere paarweise zwischen Innen- und Außenring angeordnete Klemmkörper 38 auf. Die kreiszylindrische Innenfläche des Außenrings 34 bildet eine Laufbahn für die Klemmkörper. Die äußere Umfangsfläche des Innenrings 36 bildet eine weitere Laufbahn für die Klemmkörper. Diese Laufbahn ist jedoch nicht kreisförmig, sondern bildet eine Klemmkontur mit radial nach außen weisenden Erhebungen, die das Lichtmaß des ringförmigen Spaltes zwischen Innen- und Außenring auf einen Wert verringern, der kleiner ist als der Durchmesser der Klemmkörper.

Die Klemmkörper 38 bilden insgesamt sechs Paare, und zwischen den Klemmkörper jedes Paares ist ein elastischer Distanzkörper 42 angeordnet.

Der Innenring 36 ist drehfest auf Keile 40 der Welle 22 aufgekeilt. Die Welle 22 ist über ein nicht gezeigtes Getriebe mit einem Höhenverstellmechanismus verbunden, so dass eine Drehung der Welle 22 eine Höhenverstellung des Sitzes bewirkt. Wenn auf den Sitz eine äußere Kraft ausgeübt wird, beispielsweise durch den Körper des Fahrzeuginsassen, so wirkt auf die Welle 22 ein Drehmoment, das die Tendenz hat, diese zusammen mit den Innenring 36 zu verdrehen. Dabei treten jedoch unabhängig von der Drehrichtung jeweils sechs der insgesamt zwölf Klemmkörper 38 in den enger werden den Bereich des Spaltes zwischen Innen- und Außenring ein, so dass durch Klemmwirkung der Innenring 36 an dem Außenring 34 blockiert wird. Auf diese Weise wird eine Drehung der Welle 22 verhindert und somit der Sitz in der jeweils eingestellten Position gehalten.

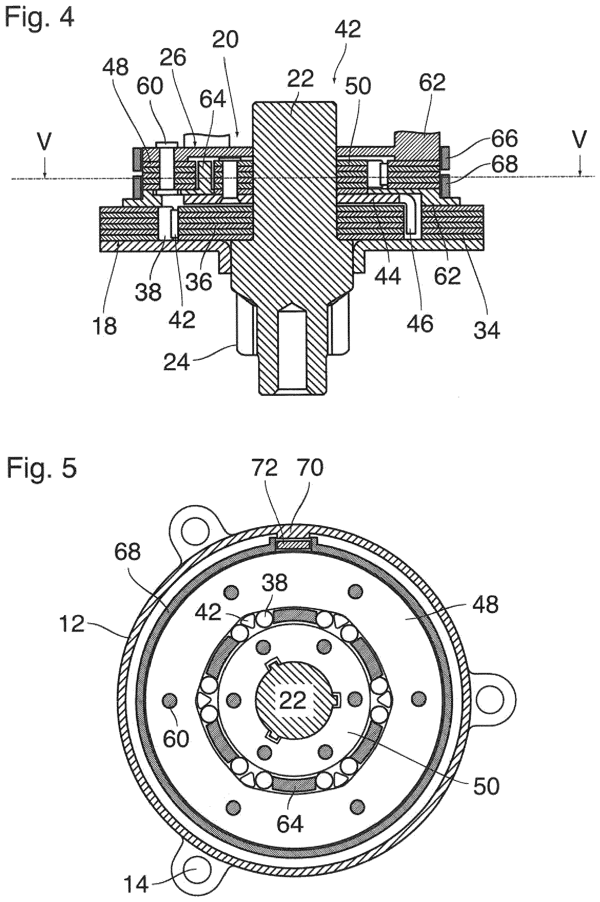

Zu der Klemmkörperkupplung 18 gehört weiterhin ein Löseelement 44 (Fig. 4), das drehbar auf der Welle 22 sitzt, jedoch mit geringem Spiel mit den Keilen 40 in Eingriff steht, so dass es über einen kleinen Winkel gegenüber dem Innenring 36 verdreht werden kann. Dieses Löseelement greift mit Klauen 46 in die Zwischenräume zwischen den einzelnen Paaren der Klemmkörper 38 ein.

Wenn nun die Höhe des Sitzes aktiv verstellt werden soll, so wird mit Hilfe eines später beschriebenen Antriebsmechanismus ein Drehmoment auf das Löseelement ausgeübt. Die geringe Verdrehung dieses Löseelements gegenüber dem Innenring 36 hat zur Folge, dass die Klauen auf jeweils einen der beiden Klemmkörper 38 jedes Paares drücken und den Distanzkörper 42 komprimieren. Dadurch wird der von der Klaue beaufschlagte Klemmkörper daran gehindert, tiefer in den sich verengenden Teil des Spaltes zwischen Innenring und Außenring einzutreten und eine Klemmwirkung auszuüben. Bei fortgesetzter Drehung des Löseelements wird dann durch die Welle 22 der Innenring 36 mitgenommen. Da die Klauen nun ein Hemmen des Klemmgesperres verhindern, werden das Löseelement, der Innenring 36 und die Welle 22 in der gewünschten Richtung gedreht, so dass der Sitz in der Höhe verstellt wird. Die Klemmkörper 38 gleiten dabei an der Laufbahn des stationären Außenrings 34 entlang. Wenn kein Drehmoment mehr auf das Löseelement wirkt, ist der Sitz in der neu eingestellten Position blockiert.

Die Besonderheit des hier beschriebenen Beispiels besteht darin, dass der Innenring 36 nicht durch einen massiven Metallkörper gebildet wird, sondern durch einen Stapel von flachen, scheibenförmigen Lamellen aus Stahlblech. Die Klemmkontur wird somit durch die miteinander bündigen Kanten der Lamellen gebildet. Entsprechend ist im gezeigten Beispiel auch der Außenring 34 aus einem Stapel von Lamellen aufgebaut.

Durch diese Bauweise wird die Herstellung des Innenrings und des Außenrings erheblich vereinfacht. Beispielsweise können die Lamellen des Innenrings und des Außenrings einfach mit der gewünschten Kontur aus einem Stahlblech geeigneter Dicke ausgestanzt werden. Die ausgestanzten Lamellen werden dann übereinander gestapelt und gehärtet, so dass verformungssteife Laufbahnen für die Klemmkörper 38 gebildet werden.

Damit sich die Lamellen des Innenrings 36 nicht gegeneinander verdrehen oder verschieben, können aus der Fläche jeder Lamelle mehrere Warzen herausgedrückt sein. Auf der entgegengesetzten Seite jeder Lamelle entsteht dabei eine der Warze entsprechende Vertiefung. Wenn die Lamellen übereinander gestapelt werden, greifen die Warzen jeweils in die Vertiefung der benachbarten Lamelle ein, so dass die Lamellen formschlüssig miteinander verriegelt werden. In entsprechender Weise werden auch die Lamellen des Außenrings 34 durch Warzen und entsprechende Vertiefungen formschlüssig verriegelt.

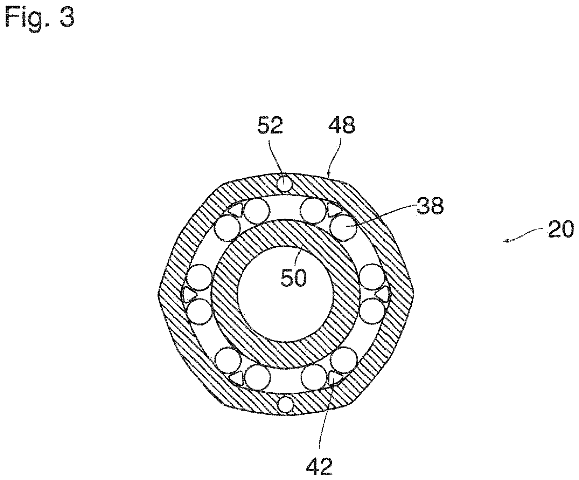

Fig. 3 zeigt einen Schnitt durch die zweite Klemmkörperkupplung 20 mit einem Außenring 48 und einem Innenring 50. In diesem Beispiel bildet die innere Laufbahn des Außenrings 48 eine nicht kreisförmige Klemmkontur, während der Innenring 50 eine kreisförmige Laufbahn bildet. Auch hier sind der Außenring 48 und der Innenring 50 aus Lamellen aufgebaut, und jeweils eine dieser Lamellen ist in Fig. 3 im Schnitt dargestellt. Die formschlüssige Verriegelung der Lamellen des Außenrings 50 erfolgt in diesem Beispiel mit Hilfe von Stiften 52, die durch miteinander fluchtende Bohrungen der Lamellen hindurchgesteckt sind.

Fig. 4 zeigt die komplette Kupplungsanordnung mit beiden Klemmkörperkupplungen 18, 20. Der Außenring 34 der ersten Klemmkörperkupplung 18 ist im Gehäuse 12 fixiert, das einen feststehenden Teil des Sitzverstellers bildet. Die Lamellen des Innenrings 36 sind drehfest auf die Welle 22 aufgekeilt.

Das Löseelement 44 der ersten Klemmkörperkupplung 18 hat die Form einer flachen Scheibe, die ebenfalls auf die Welle 22 aufgekeilt ist, jedoch relativ zu dieser Welle in Drehrichtung etwas Spiel hat. Am äußeren Umfangsrand weist das Löseelement 44 die Klauen 46 auf, die in den Ringspalt zwischen Innen- und Außenring der Klemmkörperkupplung 18 eingreifen.

Der Innenring 50 der zweiten Klemmkörperkupplung 20 liegt auf dem Löseelement 44 auf. Seine Lamellen werden durch Niete (ohne Bezugszeichen) mit dem Löseelement 44 und miteinander zusammengehalten. Die Lamellen des Innenrings 50 stehen über Nuten mit den Keilen 40 der Welle 22 in Eingriff, so dass sie ebenso wie das Löseelement 44 nur mit begrenztem Spiel relativ zu der Welle drehbar sind.

Auf dem Außenring 48 der zweiten Klemmkörperkupplung 20 liegt das Antriebselement 26 auf. Die Lamellen dieses Außenrings und das Antriebselement 26 werden durch Niete 60 zusammengehalten.

Zwischen den Lamellen des Außenrings 34 der ersten Klemmkörperkupplung 18 und dem Löseelement 44 der ersten Klemmkörperkupplung 18 ist ein Löseelement 62 der zweiten Klemmkörperkupplung 20 eingefügt. Dieses Löseelement weist am innern Umfang aufragende Klauen 64 auf, die in den Ringspalt zwischen Innenring 50 und Außenring 48 der zweiten Klemmkörperkupplung 20 eingreifen. Um eine besonders kompakte Bauweise zu ermöglichen, sind die unteren Köpfe der Nieten 60 in kreisbogenförmigen Langlöchern des Löseelements 62 aufgenommen.

In Fig. 5 ist die Anordnung von Klemmkörpern 38 und Distanzkörpern 42 der zweiten Klemmkörperkupplung 20 zwischen den Lamellen des Innenrings 50 und den Lamellen des Außenrings 48 zu erkennen, ebenso sieht man die Klauen 64 des Löseelements 62.

Der Außenring 48 ist von zwei ringförmigen Schlossfedern 66, 68 umgeben (die Schlossfeder 66 ist nur in Fig. 4 zu sehen). Wie Fig. 5 zeigt, sind die Enden der Schlossfeder 68 einerseits an einem Ansatz 70 an der Innenfläche des Gehäuses 12 und andererseits an einem Ansatz 72 festgelegt, der von dem Löseelement 62 aufragt. In entsprechender Weise sind die Enden der Schlossfeder 66 an dem gehäusefesten Ansatz 70 sowie an einem nicht gezeigten Ansatz des Antriebselements 26 festgelegt.

Wie Fig. 1 zeigt, ist in dem Zwischenraum zwischen dem Antriebselement 26 und der Decke des Gehäuses 12 ist ein Verriegelungsring 74 axial verschiebbar und drehfest an Führungen 76 geführt, die von der Decke des Gehäuses 12 ausgehen.

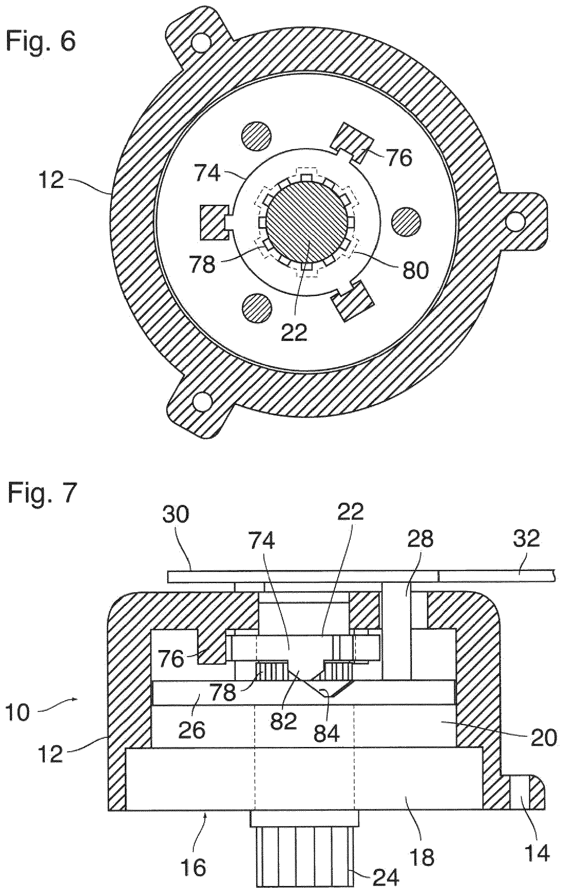

Wie Fig. 6 zeigt, weist die Welle 22 in einem den Verriegelungsring 74 durchgreifenden Abschnitt auf ihrem äußeren Umfang axial verlaufende Keile 78 auf, die in zugehörige Keilnuten in der Innenfläche des Verriegelungsrings 74 eingreifen, so dass die Welle 22 über den Verriegelungsring 74 und die Führungen 76 drehfest in dem Gehäuse 12 gehalten ist. Wie außerdem strichpunktiert in Fig. 6 angedeutet ist, weist die Welle 22 in einem Abschnitt, der das Antriebselement 26 durchgreift, ebenfalls Keile 80 auf, die mit geringem Spiel in Umfangsrichtung in zugehörige Keilnuten des Antriebselements 26 eingreifen.

Am oberen Ende in Fig. 1, oberhalb des Verriegelungsrings 74, weist die Welle 22 eine zylindrische Umfangsfläche auf, mit der sie in einer Bohrung in der Decke des Gehäuses 12 gelagert ist.

Auf der dem Antriebselement 26 zugewandten Seite weist der Verriegelungsring 74 zwei einander diametral gegenüberliegende beidseitig abgeschrägte Nocken 82 auf, die in dazu komplementäre, V-förmige Kerben 84 des Antriebselements 26 eingreifen. Eine nicht gezeigte Feder spannt den Verriegelungsring 74 nach unten vor und hält so die zueinander komplementären Nockenflächen der Nocken 82 und der Kerben 84 miteinander in Anlage. In dem in Fig. 1 gezeigten Zustand ist somit das Abtriebselement (Welle 22 und Ritzel 24) drehfest an dem feststehenden Teil (Gehäuse 12) blockiert.

Im folgenden soll die Funktionsweise des Sitzverstellers erläutert werden.

Die Schlossfeder 66 hält das Antriebselement 26 und den daran befestigten Hebel 32 in einer Neutralstellung. Wenn das Betätigungsorgan 30 mit dem Hebel 32 in irgendeiner Drehrichtung um die Achse der Welle 22 aus der in Fig. 1 gezeigten Neutralstellung heraus gedreht wird, so erlaubt das Spiel der Keile 80 in den zugehörigen Keilnuten sowie das Spiel des Löseelements 44 eine gewisse Verdrehung des Antriebselements 26 relativ zu der Welle 22 und dem Verriegelungsring 74. Dabei bewirken die Nockenflächen der Nocken 82 und der Kerben 84, dass der Verriegelungsring 74 entgegen der Federkraft in die in Fig. 7 gezeigte Position angehoben wird, in der die Keile 78 nicht mehr in die zugehörigen Keilnuten des Verriegelungsrings 74 eingreifen. Die formschlüssige Verriegelung der Welle 22 an dem Gehäuse 12 ist damit aufgehoben.

Bei seiner Drehung um die Welle 22 nimmt das Antriebselement 26 auch den Außenring 48 der Klemmkörperkupplung 20 mit. Die Klemmkörper 38 bewirken eine Hemmung, so dass auch der Innenring 50 gedreht wird. An dieser Drehung nimmt auch das Löseelement 44 der ersten Klemmkörperkupplung 18 teil, und die Klauen 46 dieses Löseelements bewirken die Entsperrung der in Fig. 7 unteren Klemmkörperkupplung 18.

Sobald der Innenring 50 geringfügig gedreht worden ist, wird daher auch die Welle 22 in Drehrichtung mitgenommen.

Bei der Drehung des Innenrings und des Außenrings der zweiten Klemmkörperkupplung 20 wird auch deren Löseelement 62 entgegen der Rückstellkraft der Schlossfeder 68 mitgenommen. Das Drehmoment wird dabei von dem Außenring 48 über die Klemmkörper 38 und die Distanzkörper 42 auf die Klauen 64 des Löseelements 62 übertragen.

Wenn nun der Hebel 32 losgelassen wird, drückt die Schlossfeder 68 auf den Ansatz 72 und stellt das Löseelement 62 in Richtung auf die Neutralstellung zurück. Durch das Löseelement wird dabei die zweite Klemmkörperkupplung 20 entsperrt. Der Innenring 50 bleibt daher in der erreichten Position, und der Außenring 48, das Antriebselement 26 und das Betätigungsorgan 30 kehren allein in die Neutralstellung zurück. Die Rückstellbewegung des Antriebselements 26 wird dabei zusätzlich durch die Schlossfeder 66 unterstützt. Obgleich das Antriebselement 26 und der Außenring 48 geringfügig gegenüber dem Löseelement 62 verdrehbar sind, wird so der Hebel 32 stabil in der Neutralstellung gehalten.

Die Welle 22 wird unterdessen sicher am Außenring 34 der ersten Klemmkörperkupplung 18 und damit am Gehäuse 12 blockiert. Durch erneutes Verschwenken des Hebels 32 in der gleichen Richtung aus der Neutralstellung heraus kann dann die Welle 22 um ein weiteres Stück verdreht werden. Mit Hilfe des Sitzverstellers kann somit der Fahrzeugsitz durch mehrmaliges "Pumpen" mit dem Hebel 32 in jeder gewünschten Richtung verstellt und dann in der erreichten Position arretiert werden.

Wenn der Hebel 32 nicht erneut verschwenkt wird, kehrt der Verriegelungsring 74 in die in Fig. 1 gezeigte Position zurück, und die Welle 22 wird so auch wieder formschlüssig am Gehäuse 12 verriegelt. Falls die Keile 78 nicht exakt mit den zugehörigen Nuten des Verriegelungsrings fluchten, rastet der Verriegelungsring 74 erst dann wieder in der Verriegelungsstellung ein, wenn sich durch das Ablaufen der Klemmkörper 38 an ihren Laufbahnen eine entsprechende Verdrehung der Welle 22 relativ zum Gehäuse 12 ergeben hat.

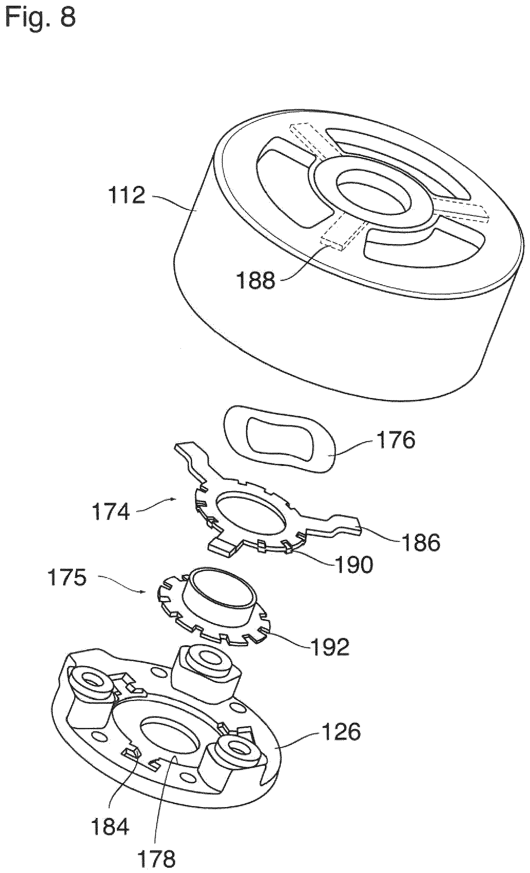

Fig. 8 illustriert einen Sitzversteller gemäß einer Ausführungsform der Erfindung. Gezeigt sind nur diejenigen Teile, die sich in ihrer Konstruktion von den entsprechenden Teilen bei dem Ausführungsbeispiel nach Fig. 1 bis 7 unterscheiden.

Dieser Sitzversteller weist ein Gehäuse 112 auf, das in seiner Funktion dem oben beschriebenen Gehäuse 12 entspricht. Ein Antriebselement 126 entspricht in seiner Funktion dem Antriebselement 26. Die Funktion des Verriegelungsrings 74 wird bei der Ausführungsform nach Fig. 8 durch einen Verriegelungsring 174 übernommen, der mit einem Pressring 175 zusammenwirkt. Eine Wellenfeder 176 stützt sich an der oberen Wand des Gehäuses 112 ab und drückt den Verriegelungsring 174 elastisch gegen den Pressring 175, der dadurch seinerseits in einer flachen ringförmigen Ausnehmung 178 des Antriebselements 126 gehalten wird. Die Ausnehmung 178 ist von drei in gleichmäßigen Winkelabständen angeordneten Taschen umgeben, die jeweils eine V-förmige Kerbe 184 bilden. Der Verriegelungsring 174 weist drei radial abstehende Flügel 186 auf, die jeweils an der Unterseite einen hier nicht sichtbaren Nocken tragen, der in eine der Kerben 184 eingreift. Die radial äußeren Enden der Flügel 186 sind in zugehörigen Taschen 188 aufgenommen, die innenseitig in der oberen Wand des Gehäuses 112 ausgebildet sind. Auf diese Weise wird der Verriegelungsring 174 drehfest an dem Gehäuse 112 gehalten.

Am Umfangsrand des Verriegelungsrings 174 ist eine Kerbverzahnung 190 gebildet, die in eine zugehörige Kerbverzahnung 192 des Pressrings 175 eingreift.

Der Pressring 175 ist spielfrei auf die Welle 22 aufgepresst. Da der Innenring 50 der zweiten Klemmkörperkupplung mit Spiel in Drehrichtung auf der Welle 22 sitzt, kann das Antriebselement 126 mit Hilfe des Betätigungsorgans 30 etwas gedreht werden. Da jedoch der Verriegelungsring 174 durch das Gehäuse 112 festgehalten wird, bewirken die Kerben 184 ein Anheben des Vcrricgclungsrings 174, mit der Folge, dass dessen Kerbverzahnung 190 aus der Kerbverzahnung 192 des Pressrings 175 frei kommt. Das erlaubt es, das Ritzel 24 und damit auch den Pressring 175 mit Hilfe der Klemmkörperkupplungen 18 und 20 zu verdrehen.

Wenn das Betätigungsorgan losgelassen wird, kehrt das Antriebselement 126 unter der Wirkung der Schlossfedern in seine Neutralstellung zurück, während die Wellenfeder 176 den Verriegelungsring 174 gegen den Pressring 175 drückt. Dabei werden jedoch zumeist die Kerbverzahnungen 190 und 192 so gegeneinander verdreht sein, dass sie noch nicht miteinander in Eingriff treten. Erst wenn durch Ablaufen der Klemmkörper eine gewisse Verdrehung des Ritzels und damit auch des Pressrings 175 eintritt, wird der Eingriff zwischen den Kerbverzahnungen wieder hergestellt, so dass der Pressring 175, die Welle 22 und das Ritzel 24 wieder durch den Verriegelungsring 174 an dem Gehäuse 112 verriegelt sind.

In einer modifizierten Ausführungsform kann der Pressring 175 auch spielfrei auf der Welle 22 sitzen und statt dessen ein gewisses Spiel in Umfangsrichtung durch die Kerbverzahnungen 190, 192 ermöglicht werden.

## Patentansprüche

1. Sitzversteller mit einem feststehenden Teil (112), einem Antriebselement (126), einem Abtriebselement (22, 24), einer Kupplungsanordnung (16), die eine hin und her gehende Bewegung des Antriebselements (126) aus einer Neutralstellung heraus und zurück in die Neutralstellung in eine fortgesetzte Bewegung des Abtriebselements (22, 24) in einer einheitlichen Drehrichtung umsetzt, und einer lösbaren Verriegelungseinrichtung zur formschlüssigen Verriegelung des Abtriebselements (22) an dem feststehenden Teil (112), wobei die Verriegelungseinrichtung durch einen in Bezug auf das feststehende Teil (112) drehfesten Verriegelungskörper (174) gebildet wird, der axial zwischen einer Verriegelungsstellung, in der er drehfest mit dem Abtriebselement (22) gekoppelt ist, und einer Entriegelungsstellung verschiebbar ist, und an dem Verriegelungskörper (174) und dem Antriebselement (126) zueinander komplementäre Nockenflächen (184) ausgebildet sind, die eine Drehung des Antriebselements (126) aus der Neutralstellung heraus in eine axiale Bewegung des Verriegelungskörpers (174) in die Entriegelungsstellung umsetzen, wobei das Abtriebselement eine Welle (22) aufweist, ein Pressring (175) auf die Welle (22) aufgekeilt ist, und der Verriegelungskörper (174) elastisch gegen den Pressring (175) vorgespannt ist und in der Verriegelungsstellung eine Position einnimmt, in der er mit dem Pressring in Eingriff steht, und in der Entriegelungsstellung eine Position einnimmt, in der er den Pressring freigibt, **dadurch gekennzeichnet,** der Verriegelungskörper (174) ein Verriegelungsring ist, der in der Verriegelungsstellung durch am Umfangsrand des Verriegelungsringes gebildete Kerbverzahnungen (190, 192) mit dem Pressring (175) in Eingriff steht, und dass die Kupplungsanordnung eine Klemmkörper-Kupplungsanordnung (16) mit einer Klemmkörperkupplung (20) mit einem Außenring (48), einem Innenring (50) und mehreren paarweise zwischen Innen- und Außenring angeordneten Klemmkörpern (38) ist, deren Außenring (48) mit dem Antriebselement (126) verbunden ist.

## Claims

1. A seat adjuster having a fixed part (112), a drive element (126), an output element (22, 24), a coupling arrangement (16) by means of which a back and forth movement of the drive element (126) out of a neutral position and back into the neutral position is converted into a continued movement of the output element (22, 24) in a uniform direction of rotation, and a releasable locking device for locking the output element (22) in a form-fitting manner on the fixed part (112), wherein the locking device is formed by a locking body (174) which is non-rotatable relative to the fixed part (112) and which is axially displaceable between a locking position, in which it is non-rotatably coupled to the output element (22), and a release position, and cam surfaces (184) are formed on the locking body (174) and the drive element (126), which cam surfaces are complementary to one another and translate a rotation of the drive element (126) away from the neutral position into an axial movement of the locking body (174) into the release position, wherein the drive element comprises a shaft (22), a press ring (175) is keyed onto the shaft (22), and the locking body (174) is elastically biased against the press ring (175) and, when in the locking state, assumes a position in which it is in engagement with the press ring and, when in the released state, assumes a position in which it releases the press ring, **characterized in that** the locking body (174) is a locking ring which, when in the locking position, is in engagement with the press ring (175) via serrations (190, 192) formed in the periphery of the locking ring, and the coupling arrangement (16) is a clamping body coupling arrangement having a clamping body clutch (20) comprising an outer ring 848) and an inner ring (50) and a plurality of clamping bodies (38) that are arranged in pairs between the inner ring and the outer ring, the outer ring (48) being connected to the drive element (126).

## Revendications

1. Dispositif de réglage, avec une partie fixe (112), un élément d'entraînement (126), un élément de sortie (22, 24), un ensemble d'accouplement (16) qui convertit un mouvement de va-et-vient de l'élément d'entraînement (126) à partir d'une position neutre et de nouveau vers la position neutre en un mouvement continu de l'élément de sortie (22, 24) dans un sens de rotation uniforme, et avec un système de verrouillage amovible destiné au verrouillage par complémentarité de forme de l'élément de sortie (22) sur la partie fixe (112), le système de verrouillage étant formé par un corps de verrouillage (174), solidaire en rotation par rapport à la partie fixe (112), qui peut être déplacé axialement entre une position de verrouillage dans laquelle il est couplé de façon solidaire en rotation à l'élément de sortie (22) et une position de déverrouillage, et des surfaces de came (184) complémentaires entre elles étant constituées sur le corps de verrouillage (174) et l'élément d'entraînement (126), lesquelles convertissent une rotation de l'élément d'entraînement (126) à partir de la position neutre en un mouvement axial du corps de verrouillage (174) vers la position de déverrouillage, l'élément de sortie comportant un arbre (22), une bague de pression (175) étant clavetée sur l'arbre (22), et le corps de verrouillage (174) étant pré-tendu élastiquement contre la bague de pression (175) et occupant dans la position de verrouillage une disposition dans laquelle il est en prise avec la bague de pression, et occupant dans la position de déverrouillage une disposition dans laquelle il libère la bague de pression, **caractérisé en ce que** le corps de verrouillage (174) est une bague de verrouillage qui, dans la position de verrouillage, est en prise avec la bague de pression (175) par des dentures cannelées (190, 192) formées sur le bord périphérique de la bague de verrouillage, et **en ce que** l'ensemble d'accouplement est un ensemble d'accouplement - corps de serrage (16) avec un accouplement à corps de serrage (20) avec une bague extérieure (48), une bague intérieure (50) et plusieurs corps de serrage (38), disposés par paires entre la bague intérieure et la bague extérieure, dont la bague extérieure (48) est raccordée à l'élément d'entraînement (126).
